## Europäisches Patentamt
## European Patent Office
## Office européen des brevets

(11) Numéro de publication : **0 141 845 B1**

(12) **FASCICULE DE BREVET EUROPÉEN**

(45) Date de publication du fascicule du brevet :
06.05.87

(21) Numéro de dépôt : 84901947.6

(22) Date de dépôt : 11.05.84

(86) Numéro de dépôt international :
PCT/CH 84/00072

(87) Numéro de publication internationale :
WO/8404447 (22.11.84 Gazette 84/27)

(51) Int. Cl.⁴ : **A 61 C   1/14, B 23 B 31/10, B 23 B 31/16**

(54) **PIECE A MAIN.**

(30) Priorité : 11.05.83 CH 2590/83

(43) Date de publication de la demande :
22.05.85 Bulletin 85/21

(45) Mention de la délivrance du brevet :
06.05.87 Bulletin 87/19

(84) Etats contractants désignés :
AT DE FR GB SE

(56) Documents cités :
FR-A-   359 776
FR-A-   643 459
FR-A- 2 345 134
FR-A- 2 444 456
GB-A-   113 465
US-A- 1 380 716
US-A- 1 499 772
US-A- 1 837 392
US-A- 3 013 804

(73) Titulaire : MOSIMANN, David
13-15, chemin des Grillons
CH-2504 Bienne 6 (CH)

(72) Inventeur : ACKERMANN, Denis
Breitenbrünnen 5
CH-3252 Worben (CH)

(74) Mandataire : Finck, Dieter et al
Patentanwälte v. Füner, Ebbinghaus, Finck Mariahilfplatz 2 & 3
D-8000 München 90 (DE)

Jouve, 18, rue St-Denis, 75001 Paris, France

## Description

La présente invention vise la réalisation d'une pièce à main, en particulier mais non exclusivement dentaire, constituée d'un rotor formé d'un arbre monté sur au moins deux moyens à roulement, l'extrémité postérieure de l'arbre étant pourvue d'une quelconque prise de transmission et son extrémité opposée comportant un logement cylindrique dans lequel une douille également cylindrique est ajustée qui comprend au moins une double fente s'étendant longitudinalement au moins partiellement et traversant la douille diamétralement, ladite douille étant destinée à recevoir la queue cylindrique d'un quelconque outil circulaire, ladite pièce à main comportant également un corps en trois parties servant de manteau au rotor, la première desdites parties consistant dans un nez au moins partiellement cylindrique dans lequel le rotor est porté en rotation par ses moyens à roulement, la deuxième consistant dans une bague moletée qui entoure à frottement gras la partie cylindrique du nez et la troisième consistant dans un corps arrière fixé à la partie postérieure du nez.

Dans les pièces à main notamment dentaires actuellement connues, par exemple, par les documents de brevet FR-A-643 459, FR-A-2 444 456 et US-A-1 380 716 et répondant partiellement à la description ci-dessus, la difficulté réside dans la rétention de la queue cylindrique de l'outil circulaire quelconque dans la douille. En effet, il s'agit d'assurer la rétention de deux éléments cylindriques ajustés gras-libre entre eux, destinés à être soumis à la même force de rotation et dont l'un, l'outil, au bout de la queue, est en outre destiné à être subordonné à une force de frottement. En d'autres termes, la queue cylindrique d'un outil rotatif insérée à frottement gras-libre dans une douille également cylindrique doit être fixée dans cette douille de façon que lorsque celle-ci est soumise à une force de rotation élevée sur son axe et lorsque l'outil (meule, fraise) est subordonné à une force de frottement, la queue cylindrique ne glisse pas dans la douille.

Les pièces à main utilisées dans l'art dentaire peuvent, d'une façon générale, être réparties en deux groupes selon leur destination ou leur usage : d'une part, les pièces à main destinées aux praticiens dont le calibre pour le passage de la queue de l'outil varie entre 1,60 et 2,35 mm et les pièces à main de laboratoire dont le même calibre varie entre 2,35 et 3,17 mm. Cependant, quel que soit leur destination ou leur usage, lesdites pièces à main répondent fondamentalement aux mêmes caractéristiques techniques s'agissant du mode de rétention de l'outil au bout de la queue cylindrique qu'elles sont destinées à porter. Elles sont toutes pourvues d'une douille cylindrique également dans laquelle la queue de l'outil est ajustée à frottement gras-libre, qui présente au moins partiellement au moins une fente longitudinale qui la traverse de part en part. Cette fente peut être doublée, triplée, voire quadruplée selon les exécutions. Pour fixer et retenir la queue cylindrique de l'outil dans la douille, on joue sur la flexibilité que présente celle-ci de par ses caractéristiques décrites. Si la douille est elle-même cylindrique, la force de rétention de la queue d'outil devra être exercée perpendiculairement à son axe qui pourra être réalisée par une came, un levier, par un ressort quelconque ou des rondelles-ressort ou encore par des billes ou des galets agissant sur un quelconque organe de forme complémentaire. Si la douille est conique ou cylindro-conique, la force de rétention de la queue d'outil pourra également être exercée perpendiculairement à son axe selon les moyens précités, mais sera, le plus souvent, exercée longitudinalement la partie conique de la douille étant comprimée dans une pièce de forme complémentaire par exemple au moyen d'un tirant de serrage.

Les moyens mis en œuvre jusqu'ici visant à la rétention de la queue d'outil dans la douille prévue à cet effet des pièces à main dentaires en particulier, se sont révélés être d'une relative efficacité dans ce sens que, s'agissant principalement des pièces à main de laboratoire destinées à des travaux de dégrossissage donc soumises à des forces de frottement importantes, on a pu constater que la queue d'outil avait tendance à avancer ou à patiner dans la douille.

L'invention vise à palier ces inconvénients tout en préservant la simplicité de manipulation de son objet.

Ces buts sont atteints par les moyens définis dans les revendications.

Le dessin annexé représente, à titre d'exemple, une forme d'exécution possible de l'invention.

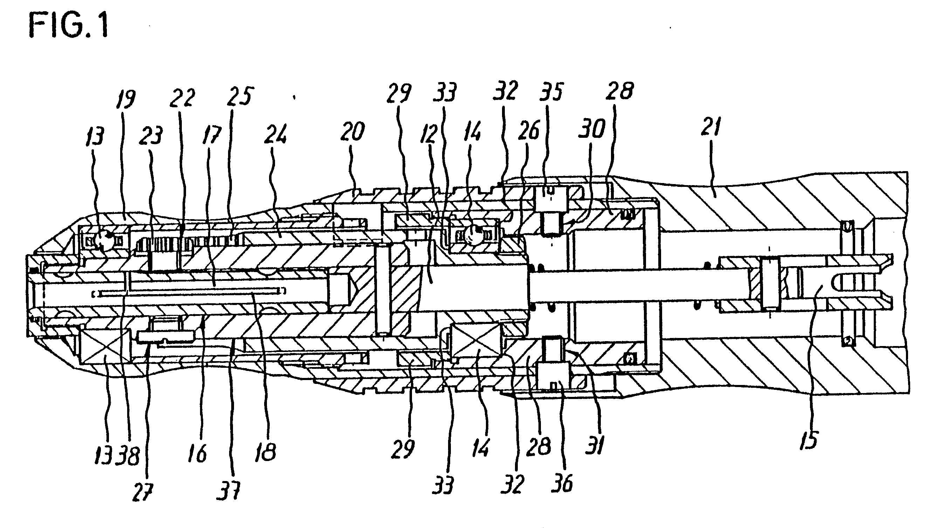

La figure 1 est une vue en coupe transversale de la pièce à main, objet de l'invention.

Les figures 2 et 4 sont des vues schématiques partielles et partiellement en coupe transversale du nez de la pièce à main telle que représentée à la fig. 1.

La figure 3 est une vue de plan de la fig. 2.

La figure 5 est une vue de plan de la fig. 4.

La pièce à main est destinée à recevoir et à retenir la queue cylindrique 11 d'un outil circulaire quelconque (meule, fraise). A cet effet, elle est constituée d'un rotor, soit un arbre 12 monté sur au moins deux moyens à roulement 13, 14. L'extrémité postérieure de l'arbre 12 est pourvue d'une prise de transmission 15 pour l'accouplement du rotor à un moyen d'alimentation tandis que son extrémité opposée comporte un logement cylindrique 16 dans lequel une douille 17 de forme correspondante est ajustée. La douille 17 présente une double fente 18 longitudinale et partielle qui la traverse diamétralement. Un corps en trois parties sert de manteau au rotor : le nez 19, partiellement cylindrique, dans lequel le rotor est effectivement monté en rotation par ses moyens à roulement 13, 14, la bague moletée 20 qui entoure à frottement gras la partie cylindrique du nez 19 et le corps arrière 21 qui est fixé à la partie postérieure du nez 19.

La rétention de la queue cylindrique 11 d'outil dans la douille 17 est assurée par la vis 22 dont la circonférence de la tête 23 est dentée comme un pignon. La jambe filetée de la vis 22 est vissée dans un trou taraudé correspondant dans l'arbre 12 du rotor, perpendiculairement à cet arbre 12, de façon qu'elle finisse par buter et appuyer sur l'une des sections de la douille 17 formées par la double fente 18 longitudinale dont est pourvue cette dernière.

Il tombe sous le sens que la double fente 18 longitudinale que présente la douille 17 lui assure une certaine flexibilité. En faisant buter et appuyer la base de la jambe de la vis 22 sur l'une des sections de la douille 17 formée par la double fente 18, on joue sur cette flexibilité pour assurer la rétention de la queue cylindrique 11 d'outil dans la douille 17 qui est optimale au centre de l'espace longitudinal formé par la double fente 18. Il convient donc que la base de la jambe de la vis 22 agisse sensiblement à cet endroit.

Dans une forme d'exécution plus élaborée, la douille 17 comporte en outre une fente transversale 38 qui la traverse de part en part et qui coupe la double fente 18. L'une des sections de la douille 17 formées par la double fente 18 se trouve ainsi transformée en une sorte de lame flexible. En faisant buter et appuyer la base de la jambe de la vis 22 sur l'extrémité antérieure de la lame, on augmente encore la force de rétention de la queue cylindrique 11 d'outil dans la douille 17.

A l'effet d'actionner la vis 22, un axe cylindrique creux 24 entoure au moins partiellement l'arbre 12 du rotor qui comporte une crémaillère 25 à son extrémité antérieure. La crémaillère 25 engrène avec le pignon sur la circonférence de la tête 23 de la vis 22. L'axe cylindrique creux 24 se prolonge entre l'arbre 12 du rotor et la bague interne du moyen à roulement 14 postérieur dont il est rendu solidaire au moyen de l'écrou 26. Cela signifie que l'axe cylindrique creux 24 suit le mouvement circulaire de l'arbre 12 du rotor. Cependant, il en reste longitudinalement indépendant pour permettre à la crémaillère 25 de tenir son rôle. A ce stade de la description, la partie longitudinalement mobile par rapport à l'arbre 12 du rotor consiste dans l'axe cylindrique creux 24, dans le moyen à roulement 14 postérieur et dans l'écrou 26.

Pour assurer le guidage de la crémaillère 25, soit pour lui éviter de dérailler en quelque sorte, l'extrémité antérieure de l'axe cylindrique creux 24 comporte, à l'opposite de la crémaillère 25, un dégagement 37 dans lequel une vis de guidage 27 vient prendre place. La tête de la vis de guidage 27 est d'un diamètre égal à la largeur du sus-dit dégagement 37 tandis que sa jambe est fixée dans l'arbre 12 du rotor.

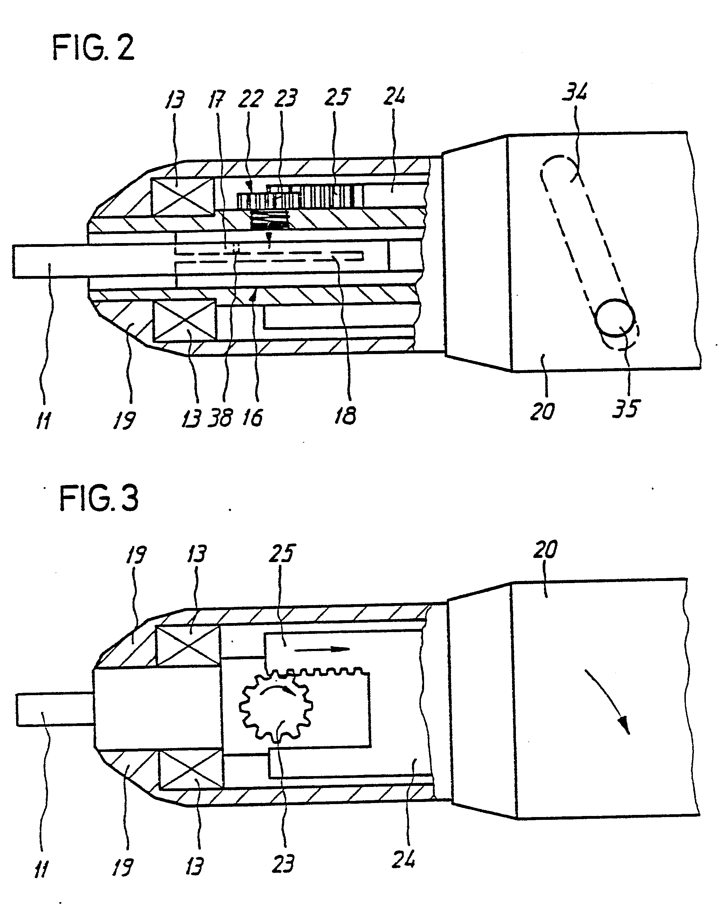

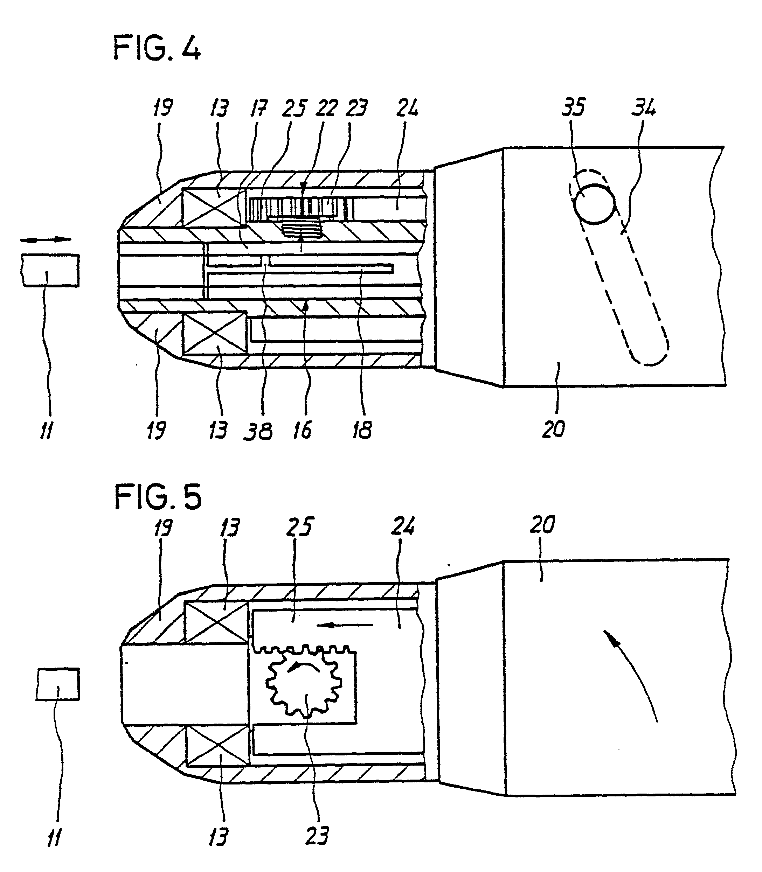

Il s'agit maintenant de pourvoir la pièce à main en cause d'un moyen capable d'assurer le recul et l'avance, longitudinalement par rapport à l'arbre du rotor, de la crémaillère 25, soit respectivement le serrage et le desserrage de la vis 22. La pièce maîtresse de ce moyen consiste dans la bague-poussoir 28 logée entre la paroi interne du nez 19 et la bague externe du moyen à roulement 14 postérieur dont elle est rendue solidaire par l'écrou 29 dans ce sens que la base de ce dernier finit par s'ajuster sur la face antérieure de la bague externe du moyen à roulement 14 postérieur. La bague-poussoir 28 comporte deux orifices 30, 31 taraudés et opposés dans sa paroi externe. Elle vient, par son rebord 32, prendre appui sur la face postérieure de la bague externe du moyen à roulement 14 postérieur qui appuie lui-même par la face antérieure de sa bague interne sur l'épaulement 33 prévu à cet effet de l'axe cylindrique creux 24. Quant à elle, la partie cylindrique du nez 19 comporte deux coulisses hélicoïdales opposées et à droite dont l'une 34 est partiellement visible dans les fig. 2 et 4. En faisant coïncider les deux orifices 30, 31 taraudés et opposés dans la paroi externe de la bague poussoir 28 avec les deux coulisses hélicoïdales opposées dans la partie cylindrique du nez 19, puis en introduisant deux vis 35, 36 à tête cylindrique dans les dits orifices 30, 31 dont les têtes tiennent lieu de coulisseaux des dites coulisses et, enfin, en faisant en sorte que les têtes cylindriques des vis 35, 36 se prolongent jusque dans des logements correspondants pratiqués dans la bague moletée 20 qui entoure à frottement gras la partie cylindrique du nez 19, on parfait le moyen dont il est question ci-dessus.

Les fig. 2 et 3 du dessin montrent, schématiquement et partiellement la pièce à main en phase de serrage de la vis 22, tandis que les fig. 4 et 5 montrent cette même pièce à main en phase de desserrage de la vis 22.

On a vu ci-dessus que la partie de la pièce à main longitudinalement mobile par rapport à l'arbre 12 du rotor était constituée de l'axe cylindrique creux 24, du moyen à roulement 14 postérieur et de l'écrou 26. A ces éléments, il faut maintenant ajouter la bague-poussoir 28 et l'écrou 29 qui rend cette bague-poussoir 28 solidaire de la bague externe du moyen à roulement 14 postérieur, de même que la bague moletée 20 qui est elle-même rendue solidaire de la bague-poussoir 28 par les têtes cylindriques des vis 35, 36.

Lorsque, selon les fig. 2 et 3, on agit sur la bague moletée 20 en la tournant à gauche, on provoque le recul de la crémaillère 25 donc le serrage de la vis 22.

Lorsque, selon les fig. 4 et 5, on agit sur la bague moletée 20 en la tournant à droite, on provoque l'avance de la crémaillère 25 donc le desserrage de la vis 22.

Pour un bon fonctionnement, il faut évidemment assurer à la partie de la pièce à main longitudinalement mobile par rapport à l'arbre 12 du rotor des espaces suffisants.

Dans la forme d'exécution de l'invention décrite ci-dessus, la pente de serrage et de desserrage, soit l'angle des coulisses hélicoïdales dans la partie cylindrique du nez 19, est sensiblement égale à 20°, ce qui provoque un chemin de la vis 22 d'environ 0,07 à 0,1 mm.

Les tests effectués sur l'objet de l'invention ont prouvé que la rétention de la queue 11 d'outil dans la douille 17 était assurée de façon maximale. En outre, en phase de serrage, les moyens à roulement 13, 14 du rotor restent libres de toute contrainte. De plus, la douille 17 est facilement interchangeable. C'est dire qu'on peut l'adapter au calibre de la queue 11 d'outil à serrer. La pièce à main selon l'invention est simple à manipuler et ne nécessite aucun outillage spécial ni dans sa pratique, ni dans son entretien. Enfin, si elle est particulièrement destinée à l'art dentaire, on peut imaginer qu'elle soit également utilisée dans d'autres domaines techniques, par exemple en chirurgie, en micromécanique ou en bijouterie-orfèvrerie.

**Revendications**

1. Pièce à main, en particulier mais non exclusivement dentaire, constituée d'un rotor formé d'un arbre (12) monté sur au moins deux moyens à roulement (13, 14), l'extrémité postérieure de l'arbre (12) étant pourvue d'une quelconque prise de transmission (15) et son extrémité opposée comportant un logement cylindrique (16) dans lequel une douille (17) également cylindrique est ajustée qui comprend au moins une double fente (18) s'étendant longitudinalement au moins partiellement et traversant la douille diamétralement, ladite douille (17) étant destinée à recevoir la queue cylindrique (11) d'un quelconque outil circulaire, ladite pièce à main comportant également ment un corps en trois parties servant de manteau au rotor, la première desdites parties consistant dans un nez (19) au moins partiellement cylindrique dans lequel le rotor est porté en rotation par ses moyens à roulement (13, 14), la deuxième consistant dans une bague moletée (20) qui entoure à frottement gras la partie cylindrique du nez (19) et la troisième consistant dans un corps arrière (21) fixé à la partie postérieure du nez (19), caractérisée en ce que la rétention de la queue cylindrique (11) de l'outil circulaire quelconque dans la douille (17) est assurée par au moins un moyen à vis (22) dont la circonférence de la tête (23) est dentée comme un pignon et dont la partie filetée a son siège dans l'arbre (12) du rotor et perpendiculairement à celui-ci, qui est destiné à comprimer localement la douille (17) par effet de son vissage dans l'arbre et en ce que le pignon constitué par la tête (23) du moyen à vis (22) engrène avec une crémaillère (25) située à l'extrémité antérieure d'un axe cylindrique creux (24) qui entoure au moins partiellement l'arbre (12) du rotor et dont le prolongement arrière est situé entre l'arbre et la bague interne du moyen à roulement postérieur (14) dont il est rendu solidaire de sorte qu'il suive le mouvement circulaire de l'arbre (12) du rotor tout en restant longitudinalement indépendant de celui-ci, la rotation de la bague moletée (20) commandant, au moyen d'une liaison intermédiaire, le déplacement longitudinal de l'axe cylindrique creux (24) avec sa crémaillère (25).

2. Pièce à main selon la revendication 1 caractérisée en ce que la douille (17) pourvue d'au moins une double fente (18) s'étendant longitudinalement partiellement comporte en outre une fente transversale (38) s'étendant partiellement sur une circonférence de la douille et raccordant une extrémité de la fente (18) longitudinale avec l'autre diamétralement opposée de façon à constituer une sorte de lame que le moyen à vis (22) est destiné à comprimer.

3. Pièce à main selon l'une ou l'autre des revendications 1 et 2 caractérisée en ce que l'extrémité antérieure de l'axe cylindrique creux (24) comporte, du côté opposé à la crémaillère (25), un dégagement (37) dans lequel un élément de guidage (27) de la crémaillère (25) vient prendre place, cet élément de guidage (27) étant fixé dans l'arbre (12) du rotor.

4. Pièce à main selon l'une ou l'autre des revendications 1 et 2 et la revendication 3, caractérisée en ce qu'une bague-poussoir (28) qui comporte deux orifices (30, 31) taraudés et opposés dans sa paroi externe est logée entre la paroi interne du nez et la bague externe du moyen à roulement postérieur dont elle est rendue solidaire et en ce que le nez (19) est pourvu de deux coulisses hélicoïdales (34) opposées dans sa partie cylindrique, de telle façon que les deux orifices (30, 31) taraudés opposés dans la paroi externe de la bague-poussoir (28) coïncident avec les deux coulisses hélicoïdales (34) opposées formées dans la partie cylindrique du nez (19), deux vis (35, 36) à tête cylindrique étant vissées dans lesdits orifices (30, 31) de manière telle que leurs têtes cylindriques tiennent lieu de coulisseaux desdites coulisses (34).

5. Pièce à main selon la revendication 4, caractérisée en ce que les têtes cylindriques des vis (35, 36) se prolongent jusque dans des logements correspondants pratiqués dans la bague moletée (20) qui entoure à frottement gras la partie cylindrique du nez (19).

**Claims**

1. Hand-piece particularly but not exclusively a dental hand-piece, consisting of a rotor consisting of a shaft (12) mounted on at least two bearing means (13, 14) the rear end of the shaft (12) being provided with any kind of transmission take-off (15), its opposite end comprising a cylindrical housing (16) in which a likewise cylindrical socket (17) is fitted, comprising at least one double slot (18) extending longitudinally at least partially and traversing the socket diametrically, the said socket (17) being adapted to receive the cylindrical tail (11) of any circular tool, the said hand-piece likewise comprising a 3-part body serving as a shell for the rotor, the first of the said parts consisting of a nose (19) which is at least partially cylindrical in which the rotor is supported in its rotation by bearing means (13, 14), the second consisting of a milled ring (20) which frictionally surrounds the cylindrical parts of the nose (19) while the third consists of a rear body (21) fixed to the rear part of the nose (19), characterised in that retention of the cylindrical tail (11) of the circular tool of any kind in the socket (17) is assured by at least one screw means (22), of which the circumference of the head (23) is toothed like a pinion and of which the screw threaded part is seated in the shaft (12) of the rotor and perpendicularly to this latter, which is intended locally to compress the socket (17) by the effect of its being screwed into the shaft and in that the pinion consisting of the head (23) of the screw means (22) meshes with a rack (25) situated at the front end of a hollow cylindrical spindle (24) which at least partially surrounds the shaft (12) of the rotor and of which the rear extension is situated between the shaft and the inner ring of the rear bearing means (14) with which it is rigid so that it follows the circular motion of the shaft (12) of the rotor while remaining longitudinally independent thereof, the rotation of the milled ring (20), through an intermediate link, controlling longitudinal displacement of the hollow cylindrical spindle (24) with its rack (25).

2. Hand-piece according to Claim 1, characterised in that the socket (17) provided with at least one double slot (18) extending partially longitudinally comprises in addition a transverse slot (38) extending partially over a circumference of the socket and connecting one end of the longitudinal slot (18) to the other diametrically opposed end in such a way as to constitute a kind of blade which the screw means (22) is intended to compress.

3. Hand-piece according to one or other of Claims 1 and 2, characterised in that the front end of the hollow cylindrical spindle (24), on the side opposite the rack (25), comprises a clearance (37) in which a guide element (27) of the rack (25) is accommodated, this guide element (27) being fixed in the shaft (12) of the rotor.

4. Hand-piece according to one or other of Claims 1 and 2 and Claim 3, characterised in that a push ring (28) which comprises two screw threaded and oppositely disposed orifices (30, 31) in its outer wall is housed between the inner wall of the nose and the outer ring of the rear bearing means, with which it is rigid, and in that the nose (19) is provided with two oppositely disposed hellical grooves (34) in its cylindrical part so that the two opposite screw threaded orifices (30, 31) in the outer wall of the push ring (28) coincide with the two oppositely disposed hellical grooves (34) formed in the cylindrical part of the nose (19), two cheese-head screws (35, 36) being screwed into the said orifices (30, 31) in such a way that their cylindrical heads serve as sliders in the said grooves (34).

5. Hand-piece according to Claim 4, characterised in that the cylindrical heads of the screws (35, 36) extend as far as into corresponding housings provided in the milled ring (20) which frictionally engages around the cylindrical parts of the nose (19).

**Patentansprüche**

1. Handstück, inbesondere aber nicht ausschließlich zahnärztliches Handstück, bestehend aus einem Rotor, der von einer Welle (12), die auf wenigstens zwei Wälzlagereinrichtungen (13, 14) aufgebracht ist, gebildet wird, wobei das hintere Ende der Welle (12) mit einem beliebigen Übertragungsanschluß (15) versehen ist und ihr gegenüberliegendes Ende ein zylindrisches Gehäuse (16) aufweist, in welchem eine ebenfalls zylindrische Buchse (17) angebracht ist, die wenigstens einen Doppelspalt (18) aufweist, welcher wenigstens teilweise längs verläuft und die Buchse diametral überquert, wobei die besagte Buchse (17) zur Aufnahme des zylindrischen Endstückes (11) eines beliebigen kreisförmigen Werkzeugs bestimmt ist, das besagte Handstück ebenfalls einen 3-teiligen Körper aufweist, der als Rotormantel dient, das erste der genannten Teile aus einer wenigstens teilweise zylindrischen Nase (19) besteht, in welcher der Rotor durch seine Lagereinrichtungen (13, 14) in Drehung gehalten ist, der zweite Teil aus einem gerändelten Ring (20) besteht, der fett reibend den zylindrischen Teil der Nase (19) umgibt, und der dritte Teil aus einem hinteren Körper (21) besteht, welcher an dem hinteren Teil der Nase (19) angebracht ist, dadurch gekennzeichnet, daß die Halterung des zylindrischen Endstückes (11) des beliebigen kreisförmigen Werkzeugs in der Buchse (17) durch wenigstens eine Schraubeneinrichtung (22) gewährleistet ist, deren Umfang des Kopfes (23) wie ein Ritzel gezahnt ist und deren Gewindeteil seinen Sitz in der Welle (12) des Rotors hat und senkrecht zu diesem ist, welche dazu bestimmt ist, die Buchse (17) am Ort durch die Wirkung ihrer Verschraubung in der Welle zusammenzudrücken, und dadurch, daß das durch den Kopf (23) der Schraubeneinrichtung (22) gebildete Ritzel mit einer Zahnstange (25), welche an dem vorderen Ende einer hohlen zylindrischen Spindel (24) angeordnet ist, kämmt, wobei die hohle zylindrische Spindel (24) wenigstens teilweise die Welle (12) des Rotors umgibt und deren hintere Verlängerung zwischen der Welle und dem inneren Ring der hinteren Lagereinrichtung (14) angeordnet ist, mit dem sie derart fest verbunden ist, daß sie der Kreisbewegung der Welle (12) des Rotors folgt, jedoch in Längsrichtung unabhängig davon bleibt, wobei die Drehung des gerändelten Rings (20) mittels einer Zwischenverbindung die Längsverschiebung der hohlen zylindrischen Spindel (24) mit ihrer Zahnstange (25) steuert.

2. Handstück nach Anspruch 1, dadurch gekennzeichnet, daß die Buchse (17), die mit wenigstens einem Doppelspalt (18) versehen ist, der sich teilweise längs erstreckt, weiterhin einen Querspalt (38) aufweist, der sich teilweise über einen Umfang der Buchse erstreckt und ein Ende des Längsspalts (18) mit dem anderen, diametral gegenüberliegenden Ende derart verbindet, daß der genannte Querspalt (38) eine Art Schneide bildet, die die Schraubeneinrichtung (22) komprimieren soll.

3. Handstück nach dem einen oder dem anderen der Ansprüche 1 und 2, dadurch gekennzeichnet, daß das vordere Ende der hohlen zylindrischen Spindel (24) auf der der Zahnstange (25) gegenüberliegenden Seite einen freien Raum (37) aufweist, in dem ein Führungselement (27) der Zahnstange (25) untergebracht ist, wobei dieses Führungselement (27) in der Welle (12) des Rotors befestigt ist.

4. Handstück nach dem einen oder dem anderen der Ansprüche 1 und 2 und dem Anspruch 3, dadurch gekennzeichnet, daß ein Druckring (28), der zwei mit Innengewinde versehene und gegenüberliegend angeordnete Öffnungen (30, 31) in seiner äußeren Wand aufweist, zwischen der inneren Wand der Nase und dem äußeren Ring der hinteren Lagereinrichtung angeordnet ist, mit der er fest verbunden ist, und daß die Nase (19) mit zwei gegenüberliegenden schraubenförmigen Gleitführungen (34) in ihrem zylindrischen Teil derart versehen ist, daß die zwei mit Innengewinde versehenen, gegenüberliegenden Öffnungen (30, 31) in der äußeren Wand des Druckringes (28) mit den zwei gegenüberliegenden schraubenförmigen Gleitführungen (34), die in dem zylindrischen Teil der Nase (19) ausgebildet sind, in Deckung stehen, wobei zwei Schrauben (35, 36) mit Zylinderkopf in die genannten Öffnungen (30, 31) derart eingeschraubt sind, daß ihre Zylinderköpfe als Schieber in den genannten Gleitführungen (34) dienen.

5. Handstück nach Anspruch 4, dadurch gekennzeichnet, daß sich die Zylinderköpfe der Schrauben (35, 36) bis in entsprechende Aufnahmen erstrecken, die in dem gerändelten Ring (20) ausgebildet sind, welcher den zylindrischen Teil der Nase (19) fett reibend umgibt.

FIG.1

## FIG. 2

## FIG. 3

# FIG. 4

# FIG. 5